(19) **Europäisches Patentamt** / **European Patent Office** / **Office européen des brevets**

(11) **EP 4 773 249 A1**

(12) **EUROPEAN PATENT APPLICATION**
published in accordance with Art. 153(4) EPC

(43) Date of publication:
08.07.2026 Bulletin 2026/28

(21) Application number: 24904183.1

(22) Date of filing: 06.12.2024

(51) International Patent Classification (IPC):
$H01M\ 4/62^{(2006.01)}$  $H01M\ 4/134^{(2010.01)}$
$H01M\ 4/587^{(2010.01)}$  $H01M\ 10/052^{(2010.01)}$
$H01M\ 4/02^{(2006.01)}$

(52) Cooperative Patent Classification (CPC):
H01M 4/02; H01M 4/134; H01M 4/587; H01M 4/62;
H01M 10/052; Y02E 60/10

(86) International application number:
PCT/KR2024/019911

(87) International publication number:
WO 2025/127618 (19.06.2025 Gazette 2025/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.12.2023 KR 20230180064

(71) Applicant: LG Energy Solution, Ltd.
Seoul 07335 (KR)

(72) Inventors:
• KO, Min Jin
Daejeon 34122 (KR)
• KWON, Yo Han
Daejeon 34122 (KR)
• LEE, Jae Wook
Daejeon 34122 (KR)

(74) Representative: Hoffmann Eitle
Patent- und Rechtsanwälte PartmbB
Arabellastraße 30
81925 München (DE)

(54) **ANODE AND LITHIUM SECONDARY BATTERY COMPRISING SAME**

(57) A negative electrode includes a negative electrode active material layer that includes a negative electrode active material, a binder, a first conductive agent, and a second conductive agent. In the negative electrode, the number average length of the first conductive agent measured using an atomic force microscopy (AFM) is 0.7 μm to 6.0 μm, the ACA, which is defined using the BET specific surface area and the weight% of each of the negative electrode active material and the first and second conductive agents as factors, is 0.5 to 5.0, and the CA, which is defined using the BET specific surface area and the weight% of each of the first and second conductive agents as factors, is 0.1 to 8.0.

EP 4 773 249 A1

**Description**

## TECHNICAL FIELD

Cross-reference to Related Applications

This application claims the benefit of Korean Patent Application No. 10-2023-0180064, filed on December 12, 2023, the disclosures of which are incorporated by reference herein.

Technical Field

The present disclosure relates to a negative electrode and a lithium secondary battery including the negative electrode.

## BACKGROUND

Lithium secondary batteries are generally composed of a positive electrode, a negative electrode, a separator, and an electrolyte, and the positive electrode and negative electrode include an active material capable of intercalation and deintercalation of lithium ions.

A lithium secondary battery is typically manufactured by interposing a separator between a positive electrode including a positive electrode active material made of a transition metal oxide containing lithium and a negative electrode including a negative electrode active material capable of storing lithium ions to form an electrode assembly, inserting the electrode assembly into a battery housing, injecting a non-aqueous electrolyte serving as a medium for transferring lithium ions, and then, sealing the electrode assembly. The non-aqueous electrolyte is typically made of a lithium salt and an organic solvent capable of dissolving the lithium salt.

Meanwhile, for the purpose of increasing the capacity of the negative electrode, various studies have been conducted utilizing a silicon-based active material with a large discharge capacity as the negative electrode active material. However, the silicon-based active material with the large discharge capacity suffers from the problem that the conductivity inside the electrode deteriorates due to the volume expansion caused from the charge and discharge of the secondary battery.

On the other hand, in order to address the volume expansion problem during the charge and discharge of the batteries, studies have also been conducted on binder polymers with high stress. However, the use of binder polymers alone could not have solved the problem of conductivity deterioration caused from the expansion/contraction of the negative electrode active material.

In order to solve the problem, carbon nanotubes (CNTs) have been applied as a conductive agent. However, since the carbon nanotubes are applied without considering the specific surface areas and the weights of the negative electrode active material and other conductive agents, problems occur such as an occurrence of clogging during a dispersion process and a transport process, or an occurrence of short circuits in the conductive network due to the contraction/expansion of the active material in the electrode during the charge and discharge, which deteriorates the life characteristics of the battery.

Therefore, there is a need for research on a negative electrode that has no problems in the electrode manufacturing process and has excellent battery life characteristics.

## DISCLOSURE OF THE INVENTION

## TECHNICAL PROBLEM

The present invention is to solve the above problems, and is to provide a negative electrode with excellent processability and excellent life characteristics by controlling the number average length of a first conductive agent, ACA expressed by Equation 1 herein below, and CA expressed by Equation 2 herein below, to satisfy the ranges according to the present disclosure.

Further, the present disclosure provides a lithium secondary battery having improved life characteristics by including the negative electrode.

## TECHNICAL SOLUTION

[1] In order to solve the above problems, an aspect of the present disclosure provides a negative electrode including: a negative electrode active material layer including a negative electrode active material, a binder, a first conductive agent, and a second conductive agent. The number average length of the first conductive agent measured using an atomic force microscopy (AFM) is 0.7 $\mu$m to 6.0 $\mu$m, ACA expressed by Equation 1 below is 0.5 to 5.0, and CA expressed by Equation 2 below is 0.1 to 8.0.

$$[Equation\ 1]$$

$$ACA = \frac{S_C \times W_C}{(S_A \times W_A) + (S_B \times W_B)}$$

In Equation 1 above, the $S_A$ is a BET specific surface area (m$^2$/g) of the first conductive agent, the $W_A$ is a weight% of the first conductive agent based on a total weight of the negative electrode active material layer, the $S_B$ is a BET specific surface area (m$^2$/g) of the second conductive agent, the $W_B$ is a weight% of the second conductive agent based on the total weight of the negative electrode active material layer, the $S_C$ is a BET specific surface area of the negative electrode active material (m$^2$/g), and the $W_C$ is a weight% of the negative electrode active material based on the total weight of the negative electrode active material layer.

$$[Equation\ 2]$$

$$CA = \frac{S_B \times W_B}{S_A \times W_A}$$

In Equation 2 above, the $S_A$ is the BET specific surface area (m$^2$/g) of the first conductive agent, the $W_A$ is the weight% of the first conductive agent based on the total weight of the negative electrode active material layer, the $S_B$ is the BET specific surface area (m$^2$/g) of the second conductive agent, and the $W_B$ is the weight% of the second conductive agent based on the total weight of the negative electrode active material layer.

[2] In the above [1] of the present invention, the number average length of the first conductive agent measured using the atomic force microscopy (AFM) may be 0.8 $\mu$m to 4.0 $\mu$m.

[3] In the above [1] or [2] of the present invention, the ACA may be 0.9 to 2.5.

[4] In at least one of the above [1] to [3] of the present invention, the CA may be 0.1 to 6.0.

[5] In at least one of the above [1] to [4] of the present invention, the negative electrode active material may include a silicon-based active material.

[6] In at least one of the above [1] to [5] of the present invention, the BET specific surface area of the negative electrode active material may be 0.2 m$^2$/g to 20 m$^2$/g.

[7] In at least one of the above [1] to [6] of the present invention, the BET specific surface area of the first conductive agent may be 800 m$^2$/g to 1,500 m$^2$/g.

[8] In at least one of the above [1] to [7] of the present invention, the first conductive agent may include a single-walled carbon nanotube.

[9] In at least one of the above [1] to [8] of the present invention, the BET specific surface area of the second conductive agent may be 25 m$^2$/g to 200 m$^2$/g.

[10] In at least one of the above [1] to [9] of the present invention, the second conductive agent may include a point-type conductive agent.

[11] In order to solve the above problems, another aspect of the present disclosure provides a lithium secondary battery including the negative electrode according to at least one of the above [1] to [10] of the present invention.

## ADVANTAGEOUS EFFECTS

The negative electrode according to the present disclosure is characterized in that the number average length of the first conductive agent, the ACA expressed by Equation 1 described above, and the CA expressed by Equation 2 described above satisfy the ranges of the present disclosure. The negative electrode satisfying the conditions is advantageous in that a negative electrode slurry prepared when manufacturing the negative electrode has an appropriate viscosity and an excellent dispersibility, which do not cause a clogging or a coating defect during the electrode manufacturing process, and enables the manufacturing of a uniform electrode. Further, even when the active material contracts and expands during charge and discharge, a conductive network may be appropriately maintained, so that the life characteristics of the battery may be improved.

## MODE FOR CARRYING OUT THE INVENTION

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

In the descriptions herein below, terms such as "contain," "include," and "have" are intended to designate the presence of features, numerals, steps, components, or combinations thereof described herein, but should not be interpreted to exclude the presence or possible addition of one or more other features, numerals, steps, components, or combinations thereof.

In the present disclosure, the "specific surface area ($m^2/g$)" is measured by the BET method, and may be calculated from a nitrogen gas adsorption amount under a liquid nitrogen temperature (77 K) using, for example, BELSORP-mino II of BEL Japan, Inc.

In the present disclosure, the "average particle diameter $D_{50}$" indicates a particle size based on 50 % of the volume cumulative particle size distribution of particles. The average particle diameter $D_{50}$ may be measured using a laser diffraction method. In general, the laser diffraction method may measure particle diameters with submicron sizes to several millimeters, and may obtain highly reproducibility and highly resolvability results.

In the present disclosure, the number average length ($\mu$m) of the first conductive agent is measured by measuring the lengths of 400 or more first conductive agents to obtain a count cumulative length distribution, from images measured at magnifications of 20 $\mu$m x 20 $\mu$m, 15 $\mu$m x 15 and/or 10 $\mu$m x 10 $\mu$m using an atomic force microscopy (AFM) (Asylum Research, Cypher ES AFM System) in the AC Air Topography mode (Tapping mode) under the condition that a set point is 0.4 V and a scan rate is 1.5Hz.

### Negative Electrode

Hereinafter, the negative electrode according to the present disclosure is described.

In the negative electrode of the related art, carbon nanotubes (CNTs) are applied as a conductive agent. However, since the carbon nanotubes are applied without considering the specific surface areas and the weights of the negative electrode active material and other conductive agents, problems occur such as an occurrence of clogging during a dispersion process and a transport process, or an occurrence of short circuits in the conductive network due to the contraction/expansion of the active material in the electrode during the charge and discharge, which deteriorates the life characteristics of the battery.

The inventors of the present invention have conducted continuous research to solve this problem, and as a result, have found that when the area ratio between the negative electrode active material and conductive agents and the area ratio between the conductive agents satisfy specific ranges while controlling the number average length of a first conductive agent measured using an atomic force microscopy (AFM), the electrode manufacturing process can be excellent and the life characteristics of the battery can be improved, thereby completing the present invention.

According to the present disclosure, a negative electrode includes a negative electrode active material layer including a negative electrode active material, a binder, a first conductive agent and a second conductive agent. The number average length of the first conductive agent measured using the atomic force microscopy (AFM) is 0.7 $\mu$m to 6.0 $\mu$m. The ACA expressed by Equation 1 below is 0.5 to 5.0. The CA expressed by Equation 2 below is 0.1 to 8.0.

[Equation 1]

$$ACA = \frac{S_C \times W_C}{(S_A \times W_A) + (S_B \times W_B)}$$

In Equation 1 above, $S_A$ is the BET specific surface area ($m^2/g$) of the first conductive agent, $W_A$ is the weight% of the first conductive agent based on the total weight of the negative electrode active material layer, $S_B$ is the BET specific surface area ($m^2/g$) of the second conductive agent, $W_B$ is the weight% of the second conductive agent based on the total weight of the negative electrode active material layer, $S_C$ is the BET specific surface area of the negative electrode active material ($m^2/g$), and $W_C$ is the weight% of the negative electrode active material based on the total weight of the negative electrode active material layer.

[Equation 2]

$$CA = \frac{S_B \times W_B}{S_A \times W_A}$$

In Equation 2 above, $S_A$ is the BET specific surface area ($m^2$/g) of the first conductive agent, $W_A$ is the weight% of the first conductive agent based on the total weight of the negative electrode active material layer, $S_B$ is the BET specific surface area ($m^2$/g) of the second conductive agent, and $W_B$ is the weight% of the second conductive agent based on the total weight of the negative electrode active material layer.

The number average length of the first conductive agent measured using the atomic force microscopy (AFM) is 0.7 $\mu$m to 6.0 $\mu$m, specifically, the number average length of the first conductive agent measured using the atomic force microscopy (AFM) may be 0.7 $\mu$m or more, 0.75 $\mu$m or more, or 0.8 $\mu$m or more, and may be 6.0 $\mu$m or less, 5.5 $\mu$m or less, 5.0 $\mu$m or less, 4.5 $\mu$m or less, or 4.0 $\mu$m or less. The number average length may be measured through the measurement using the atomic force microscopy described above, and in this case, the length characteristics may be accurately measured so that the excellent effects of the present disclosure may be achieved.

Typically, when measuring the number average length of a conductive agent, in many cases, the volume cumulative average particle diameter ($D_{50}$ and/or $D_{90}$) of a dispersion into which the conductive agent is added, is measured and used, in order to predict the formation and the uniform distribution of conductive pathways in the electrode. However, the particle size distribution in the dispersion state does not accurately reflect the actual length of the conductive agent, which causes the problem that the performance of the electrode differs even when a dispersion with the same particle size distribution is applied. According to an embodiment of the present disclosure, the length characteristics obtained from a count cumulative length distribution in atomic force microscopy images are the same between the dispersion state and the electrode state, and therefore, may be more effective in improving the performance of the electrode.

When the number average length is less than 0.7 $\mu$m, it may not be easy to maintain the conductive network connection path due to the volume change of the electrode due to charging and discharging. In addition, when the number average length exceeds 6.0 $\mu$m, the number of the first conductive agents per unit weight decreases, but the distribution of the first conductive agent within the electrode may not be uniform. In addition, the viscosity of the slurry may increase, which may result in a problem of reduced dispersibility, clogging, or poor coating during slurry transport. Therefore, when the ranges described above are satisfied, the distribution of the first conductive agent in the electrode may be uniformly maintained while appropriately maintaining the conductive network connection pathways, so that the life characteristics may be improved.

The ACA expressed by Equation 1 above is the ratio of the area of the negative electrode active material to the area of the first and second conductive agents, and may be obtained by multiplying the specific surface area and the weight% of each material. In order to achieve the excellent effects intended by the present disclosure, an appropriate combination of the specific surface area and the weight% of each of the first conductive agent, the second conductive agent, and the negative electrode active material is required.

In detail, in the denominator, the total area of the conductive agents may be calculated by summing a value obtained by multiplying the specific surface area and the weight% of the first conductive agent and a value obtained by multiplying the specific surface area and the weight% of the second conductive agent. Further, in the numerator, the total area of the negative electrode active material may be calculated by multiplying the specific surface area and the weight% of the negative electrode active material. When the ACA, which is the ratio of the total area of the negative electrode active material to the total area of the conductive agents, is controlled in a specific range, the excellent processability and the excellent life characteristics may be achieved.

For example, the large total area of the negative electrode active material indicates that a loading amount or the specific surface area of the negative electrode active material is relatively large, or the average particle diameter $D_{50}$ of the negative electrode active material is small. When the loading amount is large, an improvement in capacity characteristics may be expected, but on the contrary, it may be a counterexample where the conductive pathways are not formed normally. Further, the large total area of the conductive agents may indicate that the conductive pathways are formed normally having a network structure, but at the same time, may indicate that the loading amount of the active material is low. Therefore, it may be understood that the ratios of the areas of the active material and the conductive agents have the trade-off relationship. Further, as for the formation of conductive pathways, it may be difficult to conclude that the conductive pathways are formed normally as the total area occupied by the conductive agents is large. Therefore, it may not be easy to determine the relationship for improving the battery performance from, for example, the content or the specific surface area of the conductive agent and the content, the average particle diameter $D_{50}$, the specific surface area of the negative electrode active material.

However, according to an embodiment of the present disclosure, the first and second conductive agents are used together in the negative electrode active material layer, to simultaneously form conductive pathways between negative electrode active materials, conductive pathways inside negative electrode active materials, and conductive pathways on voids of negative electrode active materials, so that the area occupied by the conductive agents and the degree of formation of conductive pathways may be controlled to be in the proportional relationship as much as possible, and therefore, the ratio with respect to the area of the negative electrode active material may be controlled, which may result in the improvement of the battery performance.

The ACA expressed by Equation 1 above is 0.5 to 5.0, specifically, the ACA expressed by Equation 1 above may be 0.5 or more, 0.6 or more, 0.7 or more, 0.8 or more, or 0.9 or more, and may be 5.0 or less, 4.5 or less, 4.0 or less, 3.5 or less, 3.0 or less, or 2.5 or less. When the above ACA is less than 0.5, the initial conductive path of the electrode can be sufficiently formed, but the content of the negative electrode active material decreases, so that the viscosity of the slurry increases, and thus the processability may be poor. Therefore, a problem occurs in which the life characteristics of the battery deteriorate. In addition, when the above ACA exceeds 5.0, the initial conductive path of the electrode is not sufficiently formed, and there may be a problem in which the life characteristics of the battery deteriorate during charge and discharge. Therefore, When the range is satisfied, no problem may occur during the electrode manufacturing process, so that the excellent processability may be achieved, initial conductive pathways of the electrode may be sufficiently formed, and the conductive pathways may be continuously maintained during the charge and discharge, which may result in the excellent life characteristics of the battery.

The CA expressed by Equation 2 above is the ratio of the area of the second conductive agent to the area of the first conductive agent, and may be obtained by multiplying the specific surface area and the weight% of each material. In order to achieve the superior effects intended by the present disclosure, an appropriate combination of the specific surface area and the weight% of each of the first and second conductive agents is also required.

In detail, in the denominator, the total area of the first conductive agent may be obtained by multiplying the specific surface area of the first conductive agent and the weight% of the first conductive agent. Further, in the numerator, the total area of the second conductive agent may be obtained by multiplying the specific surface area of the second conductive agent and the weight% of the second conductive agent. The CA is the ratio of the total area of the second conductive agent and the total area of the first conductive agent, and when the ratio between the total area of the first conductive agent and the total area of the second conductive agent is controlled in a specific range, the excellent processability and life characteristics may be achieved.

The CA expressed by Equation 2 above is 0.1 to 8.0. Specifically, the CA expressed by Equation 2 above may be 0.1 to 7.5, more specifically 0.1 to 7.0, more specifically 0.1 to 6.5, more specifically 0.1 to 6.0. If the CA expressed by the above Equation 2 is less than 0.1 or exceeds 8.0, the conductive path may not be able to properly form a network structure or the processability may be poor during electrode manufacturing. Therefore, when the range is satisfied, the ratio between the area of the first conductive agent and the area of the second conductive agent may be appropriately controlled, so that the excellent electrode processability is achieved, and the conductive pathways may be continuously maintained during the charge and discharge, which may improve the life characteristics of the battery.

Meanwhile, the negative electrode may include: a negative electrode collector; and a negative electrode active material layer disposed on at least one side of the negative electrode collector.

The negative electrode collector is not particularly limited as long as it has a high conductivity without causing chemical changes in the battery. Specifically, the negative electrode collector may be, for example, copper, stainless steel, aluminum, nickel, titanium, calcined carbon, copper or stainless steel with its surface processed with carbon, nickel, titanium, silver or the like, or an aluminum-cadmium alloy.

The negative electrode collector may typically have a thickness of 3 $\mu$m to 500 $\mu$m.

The negative electrode collector may have microscopic irregularities on the surface thereof, to enhance the bonding strength of the negative electrode active material. For example, the negative electrode collector may be used in various forms such as a film, a sheet, foil, a net, a porous material, a foam, and nonwoven fabric.

The negative electrode active material layer is disposed on at least one side of the negative electrode collector. Specifically, the negative electrode active material layer may be disposed on one side or both sides of the negative electrode collector.

The negative electrode active material is a material allowing a reversible intercalation/deintercalation of lithium ions, and may include at least one species selected from the group consisting of a carbon-based active material, a silicon-based active material, and a lithium metal, specifically, at least one species selected from the carbon-based active material and the silicon-based active material.

The carbon-based active material may include at least one species selected from the group consisting of graphite, hard carbon, soft carbon, carbon black, graphene, and fibrous carbon, and specifically, may include graphite. The graphite may include at least one species selected from the group consisting of, specifically, artificial graphite and natural graphite.

The average particle diameter $D_{50}$ of the carbon-based active material may be 10 $\mu$m to 30 $\mu$m, specifically, 15 $\mu$m to 25 $\mu$m, from the viewpoint of maintaining the structural stability and reducing side reactions with the electrolyte during the charge and discharge.

The silicon-based active material may be one or more species selected from the group consisting of $SiO_x$ ($0 \leq x < 2$), a Si/C composite, metal-doped $SiO_x$ ($0 \leq x < 2$), and a Si-alloy, specifically, one or more species selected from the group consisting of $SiO_x$ ($0 \leq x < 2$) and the Si/C composite. In the case of $SiO_2$, since no reaction occurs with lithium ions, and thus, lithium may not be stored, "x" is selected in the range above. Further, the Si/C composite refers to a form in which carbon is physically mixed with silicon or silicon oxide. For example, a Si/C composite may be formed by incorporating silane gas into porous carbon and pyrolyzing the mixture. Alternatively, a Si/C composite may be formed by physically mixing carbon and silicon particles, by heat-treatment and coating carbon on the surface of silicon particles, or by etching a silicon-based material and coating the etched silicon-based material with carbon. However, the present disclosure is not limited thereto.

The BET specific surface area of the negative electrode active material may be 0.2 $m^2$/g to 20 $m^2$/g, specifically, 1 $m^2$/g to 15 $m^2$/g, more specifically 1 $m^2$/g to 10 $m^2$/g. When the range of the BET specific surface area of the negative electrode active material is satisfied, the specific surface area may become the appropriate specific surface area that satisfies the ACA range above, so that the conductive connectivity of the negative electrode active material particles becomes smooth, and particle breakage caused from volume expansion may be reduced.

The average particle diameter $D_{50}$ of the silicon-based active material may be 1 $\mu$m to 30 $\mu$m, specifically, 3 $\mu$m to 20 $\mu$m, more specifically 5 $\mu$m to 10 $\mu$m, from the viewpoint of maintaining the structural stability during the charge and discharge and reducing side reactions with the electrolyte.

The negative electrode active material may be included in a content of 60 wt% to 99 wt%, specifically 75 wt% to 95 wt%, based on the total weight of the negative electrode active material layer.

The binder is used to improve the bonding force between the negative electrode active material layer and the negative electrode collector, thereby improving the battery performance. For example, the binder may include at least one selected from the group consisting of a polyvinylidene fluoride-hexafluoropropylene copolymer (PVDF-co-HFP), polyvinylidenefluoride (PVDF), polyacrylonitrile, polymethylmethacrylate, polyvinyl alcohol, carboxymethylcellulose (CMC), and starch, hydroxypropylcellulose, regenerated cellulose, polyvinylpyrrolidone, polytetrafluoroethylene, polyethylene, polypropylene, polyacrylic acid, polyacrylamide, an ethylene-propylene-diene monomer (EPDM), sulfonated EPDM, styrene butadiene rubber (SBR), fluorinated rubber, and substances obtained by substituting hydrogen of the materials above with, for example, Li, Na, or Ca, and may also include various copolymers thereof.

The binder may be included in a content of 0.5 wt% to 10 wt%, specifically 1 wt% to 5 wt% in the negative electrode active material layer.

The BET specific surface area of the first conductive agent may be 800 $m^2$/g to 1,500 $m^2$/g, specifically, 900 $m^2$/g to 1,200 $m^2$/g, more specifically 1,000 $m^2$/g to 1,200 $m^2$/g. When the range is satisfied, the specific surface area of the first conductive agent may become the appropriate specific surface area that satisfies the ACA and/or CA ranges above, and may significantly contribute to the formation of conductive network among the negative electrode active materials or on the surface of the negative electrode active materials.

The first conductive agent may be a carbon nanotube. The graphite sheet of the carbon nanotube has a cylindrical shape with a nano-sized diameter, and has a $sp^2$ bond structure. At this time, the carbon nanotube may exhibit the characteristics of a conductor or a semiconductor, according to the angle and the structure at which the graphite sheet is curled. The carbon nanotube may be classified into single-walled carbon nanotube (SWCNT), double-walled carbon nanotube (DWCNT), and multi-walled carbon nanotube (MWCNT) according to the number of bonds forming walls.

The first conductive agent described above may be a single-walled carbon nanotube. When the first conductive agent is a single-walled carbon nanotube, the conductivity may be sufficiently secured even though the first conductive agent is added in a small amount, so that the electrode resistance may be reduced.

The average diameter of the single-walled carbon nanotube may be 0.5 nm to 10 nm, specifically 0.5 nm to 5.0 nm, more specifically 0.5 nm to 3 nm, more specifically 0.5 nm to 2 nm. When the range is satisfied, the single-walled carbon nanotube may form an appropriate conductive network with the negative electrode active material. The average diameter may be derived by observing the diameters of 100 single-walled carbon nanotubes included in the negative electrode active material layer using the TEM or AFM, and then, calculating an average value thereof.

The first conductive agent may be included in a content of 0.01 wt% to 0.5 wt%, specifically, 0.05 wt% to 0.5 wt%, more specifically 0.05 wt% to 0.2 wt%, based on the total weight of the negative electrode active material layer. When the range is satisfied, the conductivity of the negative electrode active material layer may be easily achieved even with the low content of the first conductive agent.

The BET specific surface area of the second conductive agent may be 25 $m^2$/g to 200 $m^2$/g, specifically 35 $m^2$/g to 200 $m^2$/g, more specifically 35 $m^2$/g to 150 $m^2$/g. When the range is satisfied, the specific surface area of the second conductive agent may become the appropriate specific surface area that satisfies the ACA and/or CA ranges above, so that the excellent processability may be achieved during the manufacturing of the electrode, and the conductivity on the surface of the negative electrode active material may easily secured.

The second conductive agent may be a point-type conductive agent. The point-type conductive agent may be carbon black, specifically, one or more species selected from acetylene black, Ketjen black, channel black, furnace black, lamp black, and summer black. More specifically, the pint-type conductive agent may be one or more species selected from acetylene black and Ketjen black. The point-type conductive agent may be generally disposed in the voids among the negative electrode active materials in the negative electrode active material layer, and may contribute to the formation of the conductive pathways in a different manner than the linear first conductive agent. Thus, when the second conductive agent, which is the point-type conductive agent having the specific surface area in the range described above, is used, the battery performance may be more effectively controlled through the equations described above.

The second conductive agent may be included in a content of 0.1 wt% to 5.0 wt%, specifically 0.1 wt% to 4.0 wt%, more specifically 0.1 wt% to 3.0 wt%, based on the total weight of the negative electrode active material layer. When the range is satisfied, the slurry may have an appropriate viscosity, so that the excellent processability may be achieved during the manufacturing of the electrode, and the conductivity on the surface of the negative electrode active materials and the conductivity among the negative electrode active materials may become excellent.

The average particle diameter $D_{50}$ of the second conductive agent may be 5 $\mu$m to 70 $\mu$m, specifically 10 $\mu$m to 60 $\mu$m, more specifically 15 $\mu$m to 50 $\mu$m.

The thickness of the negative electrode active material layer may be 10 $\mu$m to 100 $\mu$m, specifically 50 $\mu$m to 80 $\mu$m.

The negative electrode may be manufactured by coating at least one side of the negative electrode collector with a negative electrode slurry composition including the negative electrode active material, the binder, the first conductive agent, the second conductive agent, and/or a solvent for forming the negative electrode slurry, followed by drying and rolling.

The solvent for forming the negative electrode slurry may include, for example, at least one species selected from the group consisting of distilled water, N-methyl-2-pyrrolidone (NMP), ethanol, methanol, and isopropyl alcohol, from the viewpoint of facilitating the dispersion of the negative electrode active material, the binder, and/or the conductive agents, and may include, for example, the distilled water. The solid content of the negative electrode slurry may be 30 wt% to 80 wt%, specifically 40 wt% to 70 wt%.

## Lithium Secondary Battery

Next, a lithium secondary battery according to the present disclosure is described. The lithium secondary battery according to the present disclosure includes the negative electrode of the present disclosure described above, and specifically, may be a lithium secondary battery including the negative electrode according to the present disclosure.

The lithium secondary battery as described above specifically, includes a positive electrode, a negative electrode disposed facing the positive electrode, and a separator interposed between the positive electrode and the negative electrode, and an electrolyte. Since the negative electrode is the same as described above, specific descriptions thereof are omitted, and only the other components are described specifically in detail below.

The lithium secondary battery above may optionally further include a battery container for accommodating an electrode assembly composed of the positive electrode, the negative electrode, and the separator, and a sealing member for sealing the battery container.

In the lithium secondary battery above, the positive electrode may include a positive electrode collector and a positive electrode active material layer disposed on the positive electrode collector.

The positive electrode collector may not be particularly limited as long as it has the conductivity without causing chemical changes in the battery. For example, the positive electrode collector may be a stainless steel, aluminum, nickel, titanium, calcined carbon, or aluminum or stainless steel with its surface processed with carbon, nickel, titanium, silver or the like.

The positive electrode collector may have a thickness of 3 $\mu$m to 500 $\mu$m, and may include microscopic irregularities on the surface thereof to enhance the bonding strength to the positive electrode active material layer. For example, the positive electrode collector may be used in various forms such as a film, a sheet, foil, a net, a porous material, a foam, and nonwoven fabric.

The positive electrode active material layer may include a positive electrode active material, and may further include, for example, a conductive agent and a binder as necessary.

The positive electrode active material is a compound allowing reversible intercalation and deintercalation of lithium, and specifically, may include a lithium metal oxide containing lithium and one or more metals such as cobalt, manganese, nickel, or aluminum. More specifically, the lithium metal oxide may be, for example, a lithium-manganese-based oxide (e.g., $LiMnO_2$ and $LiMn_2O_4$), a lithium-cobalt-based oxide (e.g., $LiCoO_2$), a lithium-nickel-based oxide (e.g., $LiNiO_2$), a lithium-nickel-manganese-based oxide (e.g., $LiNi_{1-Y}Mn_YO_2$ (where $0<Y<1$) and $LiMn_{2-Z}Ni_ZO_4$ (where $0<Z<2$)), a lithium-nickel-cobalt-based oxide (e.g., $LiNi_{1-Y1}Co_{Y1}O_2$ (where $0<Y1<1$)), a lithium-manganese-cobalt-based oxide (e.g., $LiCo_{1-Y2}Mn_{Y2}O_2$ (where $0<Y2<1$) and $LiMn_{2-Z1}Co_{Z1}O_4$ (where $0<Z1<2$)), a lithium-nickel-manganese-cobalt-based oxide (e.g., $Li(Ni_pCo_qMn_r)O_2$ (where $0<p<1$, $0<q<1$, $0<r<1$, and $p+q+r=1$) and $Li(Ni_{p1}Co_{q1}Mn_{r1})O_4$ (where $0<p1<2$, $0<q1<2$, $0<r1<2$, and $p1+q1+r1=2$)), a lithium-nickel-cobalt-transition metal (M) oxide (e.g., $Li(Ni_{p2}Co_{q2}Mn_{r2}M_{s2})O_2$

(where M is selected from the group consisting of Al, Fe, V, Cr, Ti, Ta, Mg, and Mo, p2, q2, r2, and s2 are each an atomic fraction of an independent element, $0<p2<1$, $0<q2<1$, $0<r2<1$, $0<s2<1$, and $p2+q2+r2+s2=1$)), or lithium iron phosphate ($e.g.$, $Li_{1+a}Fe_{1-x}M_x(PO_{4-b})X_b$ (where M is one or more species selected from the group consisting of Al, Mg, and Ti, X is one or more species selected from the group consisting of F, S, and N, $-0.5\leq a\leq 0.5$, $0\leq x\leq 0.5$, and $0\leq b\leq 0.1$)), and may include a compound of any one or two or more of the materials above.

Among the materials above, from the viewpoint of enhancing the capacity characteristics and the stability of the battery, the lithium metal oxide may be, for example, $LiCoO_2$, $LiMnO_2$, $LiNiO_2$, a lithium nickel manganese cobalt oxide ($e.g.$, Li $(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, Li $(Ni_{0.7}Mn_{0.13}Co_{0.13})O_2$, and $Li(Ni_{0.8}Mn_{0.1}Co_{0.1})O_2$,), a lithium nickel cobalt aluminum oxide ($e.g.$, $Li(Ni_{0.8}Co_{0.15}Al_{0.05})O_2$), a lithium nickel manganese cobalt aluminum oxide ($e.g.$, Li $(Ni_{0.86}Co_{0.05}Mn_{0.07}Al_{0.02})O_2$), or lithium iron phosphate ($e.g.$, $LiFePO_4$), and may include a compound of any one or two or more of the materials above.

The positive electrode active material may be included in a content of 60 wt% to 99 wt%, specifically 70 wt% to 99 wt%, more specifically 80 wt% to 98 wt%, based on the total weight of the positive electrode active material layer.

The positive electrode conductive agent is a component that further improves the conductivity of the positive electrode active material. The positive electrode conductive agent is not particularly limited as long as it has the conductivity without causing chemical changes in the battery, and may be, for example, a conductive material including: carbon powder such as carbon black, acetylene black, Ketjen black, channel black, furnace black, lamp black, or thermal black; graphite powder such as natural graphite with a well-developed crystalline structure, artificial graphite, or graphite; conductive fiber such as carbon fiber or metal fiber; carbon fluoride powder; conductive powder such as aluminum powder or nickel powder; conductive whisker such as zinc oxide or potassium titanate; a conductive metal oxide such as titanium oxide; and a polyphenylene derivative.

Typically, the positive electrode conductive agent may be included in a content of 1 wt% to 20 wt%, specifically 1 wt% to 15 wt%, more specifically 1 wt% to 10 wt%, based on the total weight of the positive electrode active material layer.

The anode binder is a component that assists the bond between, for example, the active material and the conductive agent, and the bond to the collector.

Examples of the binder include polyvinylidene fluoride, polyvinyl alcohol, carboxymethylcellulose (CMC), starch, hydroxypropylcellulose, regenerated cellulose, polyvinylpyrrolidone, polyethylene (PE), polypropylene, ethylene-propylene-diene monomer, a sulfonated ethylene-propylene-diene monomer, styrene-butadiene rubber, fluorinated rubber, and various copolymers.

Typically, the positive electrode binder may be included in a content of 1 wt% to 20 wt%, specifically 1 wt% to 15 wt%, more specifically 1 wt% to 10 wt%, based on the total weight of the positive electrode active material layer.

In the lithium secondary battery above, the separator separates the negative electrode and the positive electrode and provides a transport pathway of lithium ions. The separator is not particularly limited as long as it is used as a separator in secondary batteries, and in particular, a separator having a low resistance to the ion transport by the electrolyte and an excellent electrolyte impregnation ability is used. Specifically, the separator may be a porous polymer film made of a polyolefin-based polymer such as ethylene homopolymer, propylene homopolymer, ethylene/butene copolymer, ethylene/hexene copolymer, or ethylene/methacrylate copolymer, or a stacked structure of two or more thereof. Further, the separator may be a common porous nonwoven fabric, for example, a nonwoven fabric made of a glass fiber with a high melting point or polyethyleneterephthalate fiber. Further, in order to secure the heat resistance or mechanical strength, a coated separator including a ceramic component or a polymeric material may be used, or may be used in the form of a single- or multi-layer structure.

Further, the electrolyte used in the present disclosure may be, for example, an organic liquid electrolyte, an inorganic liquid electrolyte, a solid polymer electrolyte, a gel-type polymer electrolyte, a solid inorganic electrolyte, or a molten inorganic electrolyte, which may be used in the manufacture of lithium secondary batteries, but is not limited thereto.

Specifically, the electrolyte may include an organic solvent and a lithium salt.

The organic solvent is not particularly limited as long as it serves as a medium that may transport ions involved in the electrochemical reaction of the battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (where R is a straight-chain, branched, or cyclic hydrocarbon group with 2 to 20 carbon atoms, which may include a double-bond aromatic ring or ether bond); amides such as dimethylformamide; dioxolanes such as 1,3-dioxolane; or sulfolanes. Among these materials, the carbonate-based solvent is preferable, and a mixture of cyclic carbonate ($e.g.$, ethylene carbonate or propylene carbonate) having a high ionic conductivity and a high permittivity that may improve the charge and discharge performance of the battery, and a linear carbonate-based compound ($e.g.,$ ethylmethyl carbonate, dimethyl carbonate, or diethyl carbonate) having a low viscosity may be used.

The lithium salt is not particularly limited as long as it is a compound that may provide lithium ions used in lithium secondary batteries. For example, negative ions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and the lithium salt may be, for example, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is within the range of 0.1 M to 2.0 M. When the concentration of the lithium salt falls in this range, the electrolyte has the appropriate conductivity and viscosity, so that the excellent electrolyte performance may be achieved, and the lithium ions may be effectively transported.

In addition to the electrolyte components above, the electrolyte may further include one or more additives including, for example, haloalkylenecarbonate-based compounds such as difluoroethylenecarbonate, pyridine, triethylphosphite, triethanolamine, cyclic ether, ethylene diamine, n-glyme, hexaphosphoric triamide, a nitrobenzene derivative, sulfur, quinone imine dyes, N-substituted oxazolidinone, N,N-substituted imidazolidine, ethylene glycol dialkyl ether, ammonium salt, pyrrole, 2-methoxyethanol, and aluminum trichloride. The additives may be included in a content of 0.1 wt% to 5 wt% based on the total weight of the electrolyte.

Hereinafter, Examples of the present disclosure are described in detail to enable one of ordinary skill in the art to which the present disclosure belongs, to easily practice the present disclosure. However, the present disclosure may be implemented in various forms, and is not limited to the Examples described herein.

**Example 1: Manufacture of Negative Electrode**

A negative electrode active material (specific surface area: 2.37 $m^2$/g) obtained by mixing a Si/C composite (specific surface area: 2.53 $m^2$/g) and natural graphite (specific surface area: 0.93 $m^2$/g) at the weight ratio of 90:10, an aqueous binder, a first conductive agent (SWCNT, specific surface area: 1,000 $m^2$/g) and a second conductive agent (carbon black, specific surface area: 65 $m^2$/g) were mixed in water as a solvent, to prepare a negative electrode slurry composition.

As for the content of each material based on the solids, the content of the negative electrode active material was 90 wt%, the content of the binder was 8.96 wt%, the content of the first conductive agent was 0.04 wt%, and the content of the second conductive agent was 1 wt%.

At this time, the aqueous binder was a polymer obtained through polymerization of acryl amide and acrylic acid used in a molar ratio of 60:40 (ammonium persulfate polymerization initiator, 80 °C, polymerization reaction for 6 hours).

Then, the negative electrode slurry composition was applied to one side of a copper collector having a thickness of 18 $\mu$m until reaching a thickness of 50 $\mu$m, and thereafter, dried at 120 °C and rolled to manufacture a negative electrode.

**Examples 2 and 3 and Comparative Examples 1 to 3: Manufacture of Negative Electrode**

Negative Electrodes of Examples 2 and 3 and Comparative Examples 1 to 3 were manufactured in the same manner as that in Example 1, except that the specific surface areas and the weight ratios of the negative electrode active material, the first conductive agent, and the second conductive agent were applied as described in Table 1 below.

Based on the solid content of each material, the weight% of each of the negative electrode active material, the first conductive agent, and the second conductive agent is described in Table 1 below, and the content of the binder is adjusted appropriately so that the sum of the weight% of each of the negative electrode active material, the binder, the first conductive agent, and the second conductive agent becomes 100% by weight.

Table 1 summarizes the manufacturing method above, the number average length (um) of the first conductive agent, the ACA expressed by Equation 1 above, and the CA expressed by Equation 2 above.

[Table 1]

| | Negative Electrode Active Material | | First Conductive Agent | | Second Conductive Agent | | Number Average Length ($\mu$m) of First Conductive Agent | ACA | CA |
|---|---|---|---|---|---|---|---|---|---|
| | Specific Surface Area ($m^2$/ g) | Weight% | Specific Surface Area ($m^2$/ g) | Weight% | Specific Surface Area ($m^2$/ g) | Weight% | | | |
| Example 1 | 2.37 | 90 | 1000 | 0.04 | 65 | 1 | 0.90 | 2.03 | 1.63 |
| Example 2 | 1.27 | 90 | 1200 | 0.08 | 25 | 0.5 | 2.30 | 1.05 | 0.13 |

(continued)

| | Negative Electrode Active Material | | First Conductive Agent | | Second Conductive Agent | | Number Average Length ($\mu$m) of First Conductive Agent | ACA | CA |
|---|---|---|---|---|---|---|---|---|---|
| | Specific Surface Area ($m^2/g$) | Weight% | Specific Surface Area ($m^2/g$) | Weight% | Specific Surface Area ($m^2/g$) | Weight% | | | |
| Example 3 | 3.89 | 90 | 800 | 0.04 | 100 | 2 | 4.00 | 1.51 | 6.25 |
| Comparative Example 1 | 2.37 | 90 | 800 | 0.008 | 65 | 1 | 4.00 | 2.99 | 10.16 |
| Comparative Example 2 | 2.37 | 90 | 1000 | 0.01 | 25 | 1 | 0.96 | 6.09 | 2.50 |
| Comparative Example 3 | 0.83 | 90 | 1500 | 0.02 | 150 | 1 | 0.90 | 0.42 | 5.00 |

At this time, the number average lengths ($\mu$m) of the first conductive agent was measured using the atomic force microscopy (AFM).

Specifically, after diluting the first conductive agent of each of the Examples and the Comparative Examples in water, 50 $\mu$l of the diluted solution was dropped onto the surface of freshly cleaved mica, and then, dried in vacuum, to prepare a sample. Images of the prepared sample were captured using the atomic force microscopy (AFM) (Asylum Research, Cypher ES AFM System) under the following conditions.

- Measurement mode: AC Air Topography mode (Tapping mode)
- Measurement conditions: Set point 0.4 V, Scan rate 1.5 Hz
- Measured image size: Measured at 20 $\mu$m x 20 $\mu$m, 15 $\mu$m x 15, and 10 $\mu$m x 10 $\mu$m magnifications
- Probe: AC160TS (n-type doped Si, reflective Al coating, $f_0$ 300 kHz, k 26 N/m)

From the AFM images obtained through the measurement under the conditions above, the lengths of 400 or more first conductive agents were measured (using an image processing program) to obtain a length distribution, and then, a number average length ($\mu$m) was measured.

## Experimental Example 1: Evaluation of Life Characteristics and Coating Processability

(Life Characteristics)

A coin half cell was prepared using the negative electrode of each of the Examples and the Comparative Examples.

Specifically, the negative electrode was punched into a circle with a diameter of 14 mm to prepare a test negative electrode, a lithium metal with a thickness of 0.3 mm was used as the positive electrode, porous polyethylene with a thickness of 0.1 mm was used as the separator, and an electrolyte obtained by dissolving 1 M of $LiPF_6$ in a mixed solution, in which ethylene carbonate (EC) and methyl ethyl carbonate (EMC) were mixed at a volume ratio of 50:50, was injected, to manufacture a coin half cell with a diameter of 32 mm.

The coin half cell above was charged with a constant current of 0.05 C until reaching 0.01 V, and discharged with a constant current of 0.05 C until reaching 1.5 V. The charge and discharge process was set as one cycle, and total 30 cycles were performed to calculate the capacity retention.

Specifically, the capacity retention was derived by the following calculation.

Capacity retention (%)=(30-cycle discharge capacities/1-cycle discharge capacity)

(Coating Processability)

During the manufacture of the negative electrode in the Examples and the Comparative Examples, when the negative electrode slurry composition was coated on the copper foil, an occurrence of stains on the electrode surface, an occurrence of pinholes, and an occurrence of clogging of a filter in a slurry circulation pump were checked. When any of the problems occurred, the evaluation result was described as X, and when no problem occurred, the evaluation result was described as O.

[Table 2]

|  | Capacity Retention (%) | Coating Processability |
|---|---|---|
| Example 1 | 86 | O |
| Example 2 | 85 | O |
| Example 3 | 83 | O |
| Comparative Example 1 | 66 | O |
| Comparative Example 2 | 65 | O |
| Comparative Example 3 | 77 | X |

Referring to Table 2 above, it may be seen that in Examples 1 to 3, no problem occurs even during the coating process, and the capacity retention also is excellent, compared to the Comparative Examples.

In Comparative Example 1, it may be seen that the CA exceeds the range of the present disclosure, and in this case, the conductive network is not sufficiently formed, resulting in a significant decrease in capacity retention.

In Comparative Examples 2 and 3, it may be seen that the ACA is less than or exceeds the range of the present disclosure. In this case, a problem occurs in the coating process, and the conductive network is not appropriately formed, resulting in a significant decrease in capacity retention.

**Claims**

1.  A negative electrode comprising:

    a negative electrode active material layer including a negative electrode active material, a binder, a first conductive agent, and a second conductive agent,
    wherein a number average length of the first conductive agent measured using atomic force microscopy is 0.7 $\mu$m to 6.0 $\mu$m,
    ACA expressed by Equation 1 below is 0.5 to 5.0, and
    CA expressed by Equation 2 below is 0.1 to 8.0,

    $$[\text{Equation 1}]$$

    $$ACA = \frac{S_C \times W_C}{(S_A \times W_A) + (S_B \times W_B)}$$

    in Equation 1 above, the $S_A$ is a BET specific surface area (m²/g) of the first conductive agent, the $W_A$ is a weight% of the first conductive agent based on a total weight of the negative electrode active material layer, the $S_B$ is a BET specific surface area (m²/g) of the second conductive agent, the $W_B$ is a weight% of the second conductive agent based on the total weight of the negative electrode active material layer, the $S_C$ is a BET specific surface area of the negative electrode active material (m²/g), and the $W_C$ is a weight% of the negative electrode active material based on the total weight of the negative electrode active material layer,

    $$[\text{Equation 2}]$$

    $$CA = \frac{S_B \times W_B}{S_A \times W_A}$$

    in Equation 2 above, the $S_A$ is the BET specific surface area (m²/g) of the first conductive agent, the $W_A$ is the weight% of the first conductive agent based on the total weight of the negative electrode active material layer, the $S_B$ is the BET specific surface area (m²/g) of the second conductive agent, and the $W_B$ is the weight% of the second conductive agent based on the total weight of the negative electrode active material layer.

2. The negative electrode according to claim 1, wherein the number average length of the first conductive agent measured using the atomic force microscopy (AFM) is 0.8 $\mu$m to 4.0 $\mu$m.

3. The negative electrode according to claim 1, wherein the ACA is 0.9 to 2.5.

4. The negative electrode according to claim 1, wherein the CA is 0.1 to 6.0.

5. The negative electrode according to claim 1, wherein the negative electrode active material includes a silicon-based active material.

6. The negative electrode according to claim 1, wherein the BET specific surface area of the negative electrode active material is 0.2 m$^2$/g to 20 m$^2$/g.

7. The negative electrode according to claim 1, wherein the BET specific surface area of the first conductive agent is 800 m$^2$/g to 1,500 m$^2$/g.

8. The negative electrode according to claim 1, wherein the first conductive agent includes a single-walled carbon nanotube.

9. The negative electrode according to claim 1, wherein the BET specific surface area of the second conductive agent is 25 m$^2$/g to 200 m$^2$/g.

10. The negative electrode according to claim 1, wherein the second conductive agent includes a point-type conductive agent.

11. A lithium secondary battery comprising the negative electrode of claim 1.

## INTERNATIONAL SEARCH REPORT

| International application No. |
| --- |
| **PCT/KR2024/019911** |

| A. | CLASSIFICATION OF SUBJECT MATTER |
| --- | --- |

**H01M 4/62**(2006.01)i; **H01M 4/134**(2010.01)i; **H01M 4/587**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/62(2006.01); C01B 32/174(2017.01); H01M 10/052(2010.01); H01M 4/134(2010.01); H01M 4/587(2010.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 이차 전지(secondary battery), 도전재(conductive additive), 음극 (negative electrode), 원자현미경(Atomic Force Microscopy, AFM)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0050528 A (SAMSUNG SDI CO., LTD.) 17 April 2023 (2023-04-17)<br>See paragraphs [0052] and [0056]; and claim 1. | 1-11 |
| A | KR 10-2020-0132716 A (LG CHEM, LTD.) 25 November 2020 (2020-11-25)<br>See claims 1, 5, 9-12 and 16. | 1-11 |
| A | US 2022-0006094 A1 (TOYOTA JIDOSHA KABUSHIKI KAISHA) 06 January 2022 (2022-01-06)<br>See claims 1-4. | 1-11 |
| A | KR 10-2021-0153997 A (LG ENERGY SOLUTION, LTD.) 20 December 2021 (2021-12-20)<br>See claims 1-7 and 14. | 1-11 |
| A | KR 10-2014-0023858 A (THE INDUSTRY & ACADEMIC COOPERATION IN CHUNGNAM NATIONAL UNIVERSITY (IAC)) 27 February 2014 (2014-02-27)<br>See claims 1-4. | 1-11 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 March 2025** | **12 March 2025** |

| Name and mailing address of the ISA/KR | Authorized officer |
| --- | --- |
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/019911**

| Patent document cited in search report | | | Publication date (day/month/year) | Patent family member(s) | | | Publication date (day/month/year) |
|---|---|---|---|---|---|---|---|
| KR | 10-2023-0050528 | A | 17 April 2023 | EP | 4163994 | A1 | 12 April 2023 |
| | | | | US | 2023-0109733 | A1 | 13 April 2023 |
| KR | 10-2020-0132716 | A | 25 November 2020 | CN | 113795948 | A | 14 December 2021 |
| | | | | EP | 3944380 | A1 | 26 January 2022 |
| | | | | KR | 10-2703535 | B1 | 06 September 2024 |
| | | | | US | 2022-0200005 | A1 | 23 June 2022 |
| | | | | WO | 2020-231150 | A1 | 19 November 2020 |
| US | 2022-0006094 | A1 | 06 January 2022 | CN | 113889591 | A | 04 January 2022 |
| | | | | CN | 113889591 | B | 21 June 2024 |
| | | | | JP | 2022-013199 | A | 18 January 2022 |
| | | | | JP | 7226401 | B2 | 21 February 2023 |
| | | | | US | 11978909 | B2 | 07 May 2024 |
| | | | | US | 2024-0222646 | A1 | 04 July 2024 |
| KR | 10-2021-0153997 | A | 20 December 2021 | CN | 115298852 | A | 04 November 2022 |
| | | | | EP | 4109593 | A1 | 28 December 2022 |
| | | | | JP | 2023-520194 | A | 16 May 2023 |
| | | | | JP | 7466981 | B2 | 15 April 2024 |
| | | | | US | 2023-0135194 | A1 | 04 May 2023 |
| | | | | WO | 2021-251663 | A1 | 16 December 2021 |
| KR | 10-2014-0023858 | A | 27 February 2014 | KR | 10-1604003 | B1 | 17 March 2016 |
| | | | | KR | 10-1751787 | B1 | 29 June 2017 |
| | | | | WO | 2014-027845 | A1 | 20 February 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230180064